# EUROPÄISCHE PATENTANMELDUNG

(11) **EP 0 786 405 A1**
(43) Veröffentlichungstag der Anmeldung: **30.07.1997**
(21) Anmeldenummer: 96118725.9
(22) Anmeldetag: 22.11.1996
(51) Int. Cl.: B65B 7/28

(54) **Vorrichtung zum Aufsiegeln von Deckblattfolien auf gefüllte Behälter, vorzugsweise Kunststoffbecher in einer Verpackungsmaschine**

(30) Priorität: 26.01.1996 DE 19602728
(71) Anmelder: Benz & Hilgers GmbH, 41468 Neuss (DE)
(72) Erfinder: Kühn, Olaf, 47918 Tönisvorst (DE); Quack, Hans-Willi, 40764 Langenfeld (DE)
(74) Vertreter: Pfeiffer, Helmut, Dipl.-Ing.

(57) **Zusammenfassung**

Die Erfindung bezieht sich auf eine Vorrichtung zum Aufsiegeln von Deckblattfolien auf gefüllte Behälter, vorzugsweise Kunststoffbecher in einer Verpackungsmaschine mit einer von einem Hauptantrieb angetriebenen Transporteinrichtung zur Aufnahme der Behälter bzw. Kunststoffbecher und einer Siegelstation mit einem auf- und abbewegbaren Siegelkopf (2), der zur Erzielung einer auch bei variablen Maschinenleistungen einwandfreien Siegelqualität von einem rechnergesteuerten Servomotor (9) angetrieben wird, der einen eine von der jeweiligen Maschinengeschwindigkeit unabhängige konstante Siegelzeit gewährleistenden zeitlichen Startpunkt aufweist.

## Beschreibung

Die Erfindung betrifft eine Vorrichtung zum Aufsiegeln von Deckblattfolien auf gefüllte Behälter, vorzugsweise Kunststoffbecher in einer Verpackungsmaschine mit einer von einem Hauptantrieb taktweise bewegbaren, die Behälter bzw. Kunststoffbecher aufnehmenden Transporteinrichtung und einer einer Füllstation nachgeschalteten Siegelstation, die einen auf- und abbewegbar angetriebenen und unter Anwendung von Druck und Wärme eine dichte Verbindung zwischen der Deckblattfolie und dem Behälter bzw. Kunststoffbecher herstellenden Siegelkopf aufweist.

In der Verpackungsindustrie ist es für Verpackungsmaschinen allgemein bekannt, mittels einer sogenannten Heißsiegelung aus Aluminium und/oder Kunststoff bestehende Deckelfolienelemente oder ähnliche Verschlußelemente gegebenenfalls unter Verwendung von Siegellack auf gefüllte Behälter, wie z. B. Joghurtbecher oder dergleichen aufzubringen. Ein einwandfreies Siegelergebnis läßt sich jedoch nur dann erreichen, wenn den bei der Siegelung eine Rolle spielenden Parametern, wie Siegeldruck, Temperatur und der Dauer der Siegelzeit eine besondere Aufmerksamkeit geschenkt wird. Angestrebt wird, diese Parameter so aufeinander abzustimmen, daß auch bei unterschiedlichen Materialien und/oder Dicke sowohl der Deckelfolienelemente als auch der Verpackunsbehälter einwandfreie Siegelergebnisse erzielt werden. Trotz dieser Kenntnis kommt es immer wieder vor, daß die Siegelqualität zu wünschen übrig läßt, da die Siegelzeit eine zu große Streubreite aufweist. Das ist darauf zurückzuführen, daß der Antrieb des Siegelkopfes mit dem Hauptantrieb der Verpackungsmaschine gekoppelt ist, was bedeutet, daß bei unterschiedlicher Maschinenleistung auch die Siegelzeit unterschiedlich ist. Dieses Problem tritt grundsätzlich auch dann auf, wenn die Verpackungsmaschine von Null auf ihre maximale Leistung hochgefahren wird, da dann die Bandbreite für die tatsächlich auftretende Siegelzeit sehr groß ist. In der Vergangenheit hat man versucht, durch Anpassung des Siegeldruckes oder der Siegeltemperatur das Siegelergebnis zu optimieren. Völlig befriedigende Ergebnisse konnten jedoch nicht erzielt werden, obwohl man versucht hat, den Siegeldruck über pneumatische Oderglieder und/oder die Temperatur über hochauflösende Regler anzupassen.

Der Erfindung liegt nun die Aufgabe zugrunde, eine Vorrichtung der eingangs genannten Art zu schaffen, die auch bei variabler Maschinenleistung und vor allem bei anfahrender Maschine eine einwandfreie Siegelqualität gewährleistet und durch Ausnutzung einer optimalen Siegelzeit eine höhere Maschinenleistung ermöglicht.

Diese Aufgabe wird erfindungsgemäß dadurch gelöst, daß der Antrieb des Siegelkopfes von einer zum Hauptantrieb der Verpackungsmaschine zusätzlich vorgesehenen Antriebseinrichtung in Form eines mit einer Rechnersteuerung verbundenen Servomotors gebildet ist, der einen eine von der jeweiligen Maschinengeschwindigkeit unabhängige, konstante Siegelzeit gewährleistenden zeitlichen Startpunkt aufweist. Durch das Entkoppeln des Siegelvorgangs vom Antrieb der Verpackungsmaschine und Einsatz eines separaten Antriebs in Form eines Servomotors für die Versiegelung der Deckfolienblätter, ist es mit einfachen Mitteln möglich, eine konstante Siegelzeit einzuhalten. Die optimale Siegelzeit läßt sich für jeweils zum Einsatz gelangende Packmittel mit relativ einfachen Versuchen ermitteln. Mit den Mitteln nach der Erfindung kommt man zu einer Verpackungsmaschine, bei der sowohl beim Anlaufen der Maschine als auch bei vergleichsweise hohen Takten stets eine optimale Siegelung erreicht wird.

Grundsätzlich ist es möglich, daß der Servomotor zum Antrieb des Siegelkopfes einen dynamischen, nämlich der jeweiligen Maschinengeschwindigkeit angepaßten Startpunkt aufweist. Diese Vorgehensweise erfordert jedoch, daß die anfahrende Beschleunigung für den Servomotor immer konstant ist. Für diesen Fall muß der Startpunkt des Servomotors in Abhängigkeit der Maschinenleistung dynamisch gehalten sein. Das bedeutet, daß z. B. bei einer minimalen Maschinenleistung, bei mittlerer Maschinenleistung und bei maximaler Maschinenleistung der Servomotor stets zu unterschiedlichen zeitlichen Startpunkten in Gang gesetzt wird, um auf diese Weise sicherzustellen, daß der Siegelkopf erst beim Stillstand der Transportvorrichtung auf den Behälter bzw. den Kunststoffbecher auftrifft. Die jeweilige Anpassung des Startpunktes des Servomotors an die jeweilige Maschinengeschwindigkeit erfordert einen gewissen Steuerungsaufwand.

Wesentlich günstiger ist es daher, wenn man von einer Steuerung ausgeht, bei der der Servomotor einen fixen, d. h. von der Maschinengeschwindigkeit unabhängigen Startpunkt und der Siegelkopf ausgehend vom fixen Startpunkt des Servomotors bis zum Beginn der Siegelung eine variable Absenkzeit aufweisen. Mit anderen Worten bedeutet dies, daß die Rampe der Abwärtsbewegung des Siegelkopfes der jeweiligen Maschinengeschwindigkeit so angepaßt wird, daß der Siegelkopf erst beim Stillstand der Transportvorrichtung auf den Behälter bzw. Kunststoffbecher auftritt.

Eine solche Steuerung läßt sich dann besonders einfach verwirklichen, wenn die Steuerung mit dem Servomotor einerseits und dem Hauptantrieb (Hauptantriebswelle) der Verpackungsmaschine andererseits über Steuerimpulse verarbeitende Initiatoren, vorzugsweise Inkrementalgeber in Wirkverbindung steht. Durch permanenten Vergleich der Drehwinkel der Inkrementalgeber paßt die Steuerung die Abwärtsbewegung des Siegelkopfes der Maschinenleistung an.

Ausführungsbeispiele der Erfindung sind in der Zeichnung dargestellt und werden im folgenden näher erläutert: Es zeigen:
- Fig. 1: einen Längsschnitt durch einen Siegelkopf einer Verpackungsmaschine,
- Fig. 2: eine schematische Darstellung einer separaten Antriebseinrichtung für den Siegelkopf einer Siegelstation,
- Fig. 3: eine erste Ausführungsvariante für die Steuerung eines Servomotors der Siegelstation mit dynamischem Startpunkt und
- Fig. 4: eine schematische Darstellung der Steuerung der Siegelstation mit variabler Absenkzeit des Siegelkopfes.

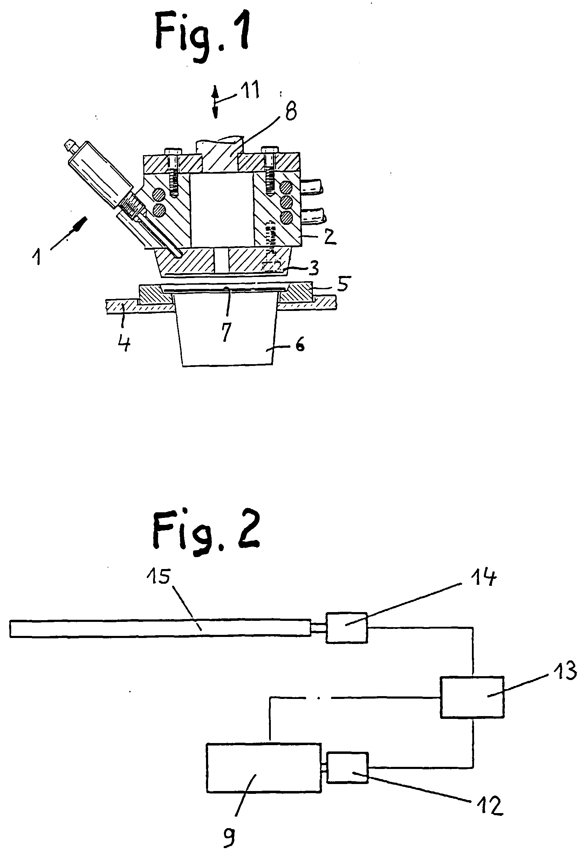

In Figur 1 ist eine Siegelkopfaufhängung 1 einer im einzelnen nicht dargestellten Verpackungsmaschine, beispielsweise einer Hochleistungs-Füll- und -verschließmaschine dargestellt. Die Siegeleinrichtung besitzt einen aufheizbaren Siegelkopf 2, an dessen Unterseite ein Formatteil 3 befestigt ist. Unterhalb des Formatteils 3 befindet sich eine im einzelnen nicht dargestellte Transporteinrichtung in Form eines Zellenblechs 4, das mit einem Einsatzring 5 versehen ist, in den ein Behälter 6, beispielsweise ein Kunststoffbehälter, eingehängt ist. Wie an sich bekannt - jedoch hier nicht dargestellt - können mehrere solcher Behälter in der Transportkette bzw. dem Zellenblech 4 angeordnet sein. Mit Hilfe des Siegelkopfes 2 läßt sich in bekannter Weise eine aus Aluminium und/oder Kunststoff bestehende Deckelblattfolie 7 auf dem Becherrand ansiegeln, so daß ein dichter Verschluß entsteht. Der Siegelkopf 2 kann über ein im einzelnen nicht dargestelltes Kurbelgestänge 8 von einem in Figur 2 gezeigten Servomotor 9 entsprechend der Pfeilangabe 11 auf- und abwärts bewegt werden. Aus den weiter unten näher erläuterten Gründen steht der Servomotor über einen Inkrementalgeber 12 mit einer Rechnersteuerung 13 in Verbindung, die ihrerseits über einen weiteren Inkrementalgeber 14 mit einem Hauptantrieb, beispielsweise einer Hauptantriebswelle 15 der Verpackungsmaschine in Verbindung steht. Um eine optimale Siegelung zu erhalten, ist es erforderlich, daß neben dem Siegeldruck und der Temperatur auch die Siegelzeit konstant gehalten wird.

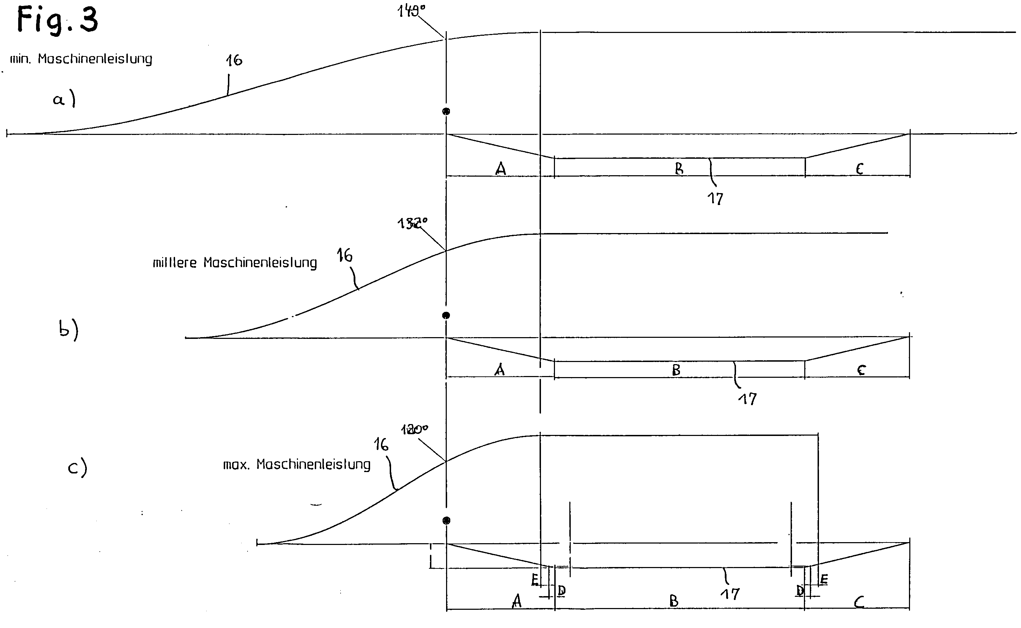

Bei einer ersten Ausführungsvariante erfolgt die Steuerung des Servomotors der Siegelstation zwecks Erzielung einer konstanten Siegelzeit mit dynamischem Start. Dies ist anhand der Figuren 3 a, b, c hinsichtlich einer minimalen einer mittleren Maschinenleistung und einer maximalen Maschinenleistung näher erläutert. Anhand jeweils eines Maschinentaktes entsprechend 360 Steuerimpulsen (360°), ist mit dem sinusförmig verlaufenden Kurvenzug 16 die Transportbewegung der Transporteinrichtung, beispielsweise der Transportkette dargestellt. Wie ersichtlich, erfolgt in allen Fällen, d. h. sowohl bei minimaler, mittlerer und maximaler Maschinenleistung das Ende des Kettenvorzugs bei 180°. Die Axialbewegung des Siegelkopfes ist jeweils mit der Kurve 17 dargestellt, die sich über die Bereiche A, B und C bewegt. Die mit A bezeichnete Abwärtsbewegung des Siegelkopfes ist in allen drei Fällen konstant, ebenso wie die mit B bezeichnete Siegelzeit. Auch die mit C bezeichnete Aufwärtsbewegung des Siegelkopfes ist gleichfalls in allen drei Fällen gleich. Um dennoch sicherzustellen, daß der Siegelkopf erst beim Stillstand der Kette auf den Behälter auftrifft, muß der Startpunkt des Servomotors 9 der jeweiligen Maschinengeschwindigkeit angepaßt werden. Dies erfolgt im dargestellten Ausführungsbeispiel dadurch, daß der zeitliche Startpunkt des Servomotors 9 dynamisch ist, d. h. in Abhängigkeit, ob eine minimale, eine mittlere oder eine maximale Maschinenleistung vorliegt, erfolgt der Startpunkt zu unterschiedlichen Winkelgraden. So erfolgt im Falle a), also bei minimaler Maschinenleistung, der Startpunkt bei 148°, bei mittlerer Maschinenleistung bei 132° (b) und bei maximaler Maschinenleistung bei 120° (c). Beginnend von diesem Startpunkt aus, vollführt der Siegelkopf seinen voreinstellbaren, beispielsweise auf 18 mm einstellbaren Hub. Mit D ist die normalerweise vorhandene Federzeit, d. h. ein Federweg mit beispielsweise 1 mm Konstanz, bezeichnet und mit E ein Sicherheitszuschlag, der gleichfalls in allen drei Fällen konstant ist. Gesteuert wird der Servomotor mit der oben erläuterten Steuerungseinrichtung 13 in Verbindung mit den Inkrementalgebern 12, 14 über den Servomotor 9.

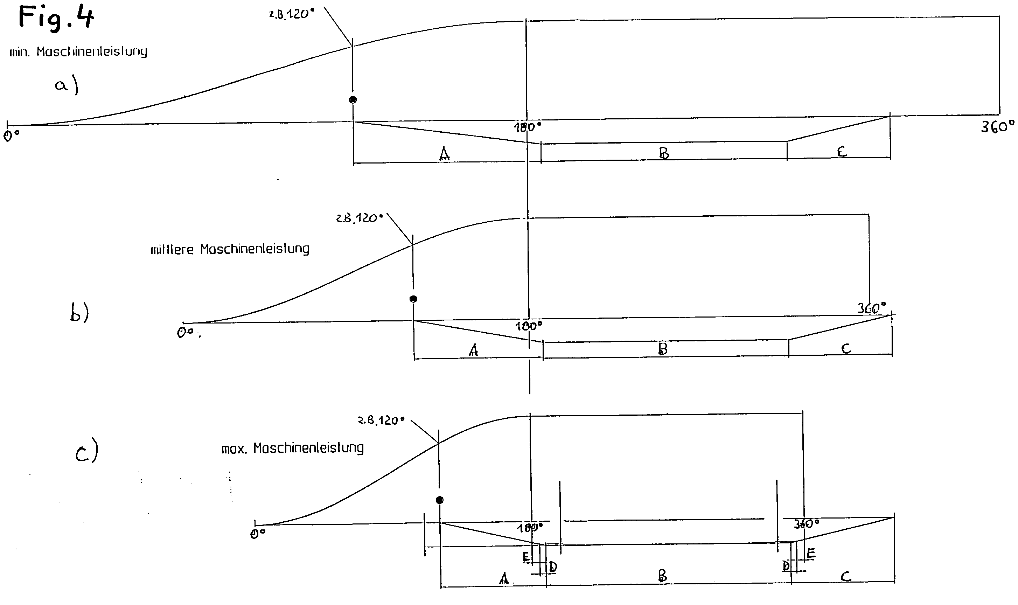

Bei der in Figur 4 dargestellten Steuerung des Servomotors der Siegelstation wird zum Erzielen einer konstanten Siegelzeit der Siegelkopf 2 mit einer variablen Absenkzeit abgesenkt. In diesem Fall erfolgt die Steuerung des Servomotors mit einem fixen Startpunkt, d. h. unabhängig davon, ob es sich um eine minimale, mittlere oder maximale Maschinenleistung handelt. Im angenommenen Fall erfolgt der Startpunkt bei 120°. Um auch in diesem Fall die konstante gewünschte Siegelzeit einhalten zu können, ist - wie ersichtlich die Rampe der Abwärtsbewegung des Siegelkopfes 2 der jeweiligen Maschinengeschwindigkeit angepaßt. Im Falle der Figur 4 a) und im Falle b) und c) jeweils die Zeit für die Abwärtsbewegung des Siegelkopfes unterschiedlich ist. In allen Fällen ist sichergestellt, daß trotz des gleichen Maschinenzeitpunktes, zu dem der Servomotor startet, durch entsprechende Anpassung der Siegelkopfabwärtsbewegung der Siegelkopf erst dann auf den Behälter bzw. Kunststoffbecher trifft, wenn die Vorzugskette zum Stillstand gekommen ist. Diese Steuerung erfolgt durch permanenten Vergleich der Drehwinkel der Inkrementalgeber.

Durch diese erfindungsgemäße Steuerungsvariante erreicht man, daß - je schneller die Maschine läuft - je eher der Servomotor startet, so daß beispielsweise Verpackungsmaschinen, die bisher mit 60 Takten gefahren worden sind, nunmehr 75 Takte zulassen, da die erzielte optimale Siegelzeit ausgenutzt werden kann.

Zu erwähnen ist noch, daß die erfindungsgemäße Lösung den Vorteil mit sich bringt, daß diese unabhängig vom jeweiligen Maschinentyp eingesetzt werden kann, vor allen Dingen ist nicht nur ein Einsatz bei Becherfüll- und -verschließmaschinen denkbar, sondern beispielsweise auch bei Tiefziehmaschinen.

## Patentansprüche

1. Vorrichtung zum Aufsiegeln von Deckblattfolien auf gefüllte Behälter, vorzugsweise Kunststoffbecher in einer Verpackungsmaschine, mit einer von einem Hauptantrieb taktweise bewegbaren, die Behälter bzw. Kunststoffbecher aufnehmenden Transporteinrichtung und einer einer Füllstation nachgeschalteten Siegelstation, die einen auf- und abbewegbar angetriebenen und unter Anwendung von Druck und Wärme eine dichte Verbindung zwischen der Deckblattfolie und dem Behälter bzw. Kunststoffbecher herstellenden Siegelkopf aufweist, **dadurch gekennzeichnet**, daß der Antrieb des Siegelkopfes (2) von einer zum Hauptantrieb der Verpackungsmaschine zusätzlich vorgesehenen Antriebseinrichtung in Form eines mit einer Rechnersteuerung (13) verbundenen Servomotors (9) gebildet ist, der einen eine von der jeweiligen Maschinengeschwindigkeit unabhängige, konstante Siegelzeit gewährleistenden zeitlichen Startpunkt aufweist.

2. Vorrichtung nach Anspruch 1, **dadurch gekennzeichnet**, daß der Servomotor (9) einen dynamischen, d. h. der jeweiligen Maschinengeschwindigkeit angepaßten Startpunkt aufweist.

3. Vorrichtung nach Anspruch 1, **dadurch gekennzeichnet**, daß der Servomotor (9) einen fixen, d. h. von der Maschinengeschwindigkeit unabhängigen Startpunkt und der Siegelkopf (2), ausgehend vom fixen Startpunkt des Servomotors (9) bis zum Beginn der Siegelung eine variable Absenkzeit aufweisen.

4. Vorrichtung nach einem oder mehreren der Ansprüche 1 bis 3, **dadurch gekennzeichnet**, daß die Rechnersteuerung (3) mit dem Servomotor (9) einerseits und dem Hauptantrieb (Hauptantriebswelle 15) der Verpackungsmaschine andererseits über Steuerimpulse verarbeitende Initiatoren, vorzugsweise Inkrementalgeber (12, 14) in Wirkverbindung steht.
